(19) Europäisches Patentamt / European Patent Office / Office européen des brevets

(11) **EP 4 442 360 A1**

(12) **EUROPEAN PATENT APPLICATION**
published in accordance with Art. 153(4) EPC

(43) Date of publication:
**09.10.2024 Bulletin 2024/41**

(21) Application number: **23886016.7**

(22) Date of filing: **22.09.2023**

(51) International Patent Classification (IPC):
**B01J 23/00** (2006.01)    **B01J 23/02** (2006.01)
**B01J 21/06** (2006.01)    **B01J 23/755** (2006.01)
**B01J 23/46** (2006.01)    **B01J 37/02** (2006.01)
**C01B 3/40** (2006.01)

(52) Cooperative Patent Classification (CPC):
**B01J 21/06; B01J 23/00; B01J 23/02; B01J 23/46;**
**B01J 23/755; B01J 37/02; C01B 3/40;** Y02P 20/52

(86) International application number:
**PCT/KR2023/014479**

(87) International publication number:
**WO 2024/096319 (10.05.2024 Gazette 2024/19)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **04.11.2022 KR 20220146236**

(71) Applicant: **LG Chem, Ltd.**
**Yeongdeungpo-gu**
**Seoul 07336 (KR)**

(72) Inventors:
• **KIM, Sojin**
**Daejeon 34122 (KR)**
• **CHO, Jun Yeon**
**Daejeon 34122 (KR)**

• **KIM, Sangjin**
**Daejeon 34122 (KR)**
• **KIM, Suji**
**Daejeon 34122 (KR)**
• **KIM, Yongseon**
**Daejeon 34122 (KR)**
• **CHOI, Jae Soon**
**Daejeon 34122 (KR)**
• **CHOI, Jun Seon**
**Daejeon 34122 (KR)**
• **CHOI, Hyun A**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **CATALYST FOR REFORMING METHANE AND METHOD FOR PRODUCING SAME**

(57) The present application provides a catalyst for methane reformation and a method for manufacturing the same. The catalyst for methane reformation includes a porous metal support; a primary coating layer provided on the porous metal support; and a secondary coating layer provided on the primary coating layer, wherein the primary coating layer includes a perovskite-based compound with a coefficient of thermal expansion of 65% or greater compared to a coefficient of thermal expansion of the porous metal support, wherein the secondary coating layer includes a perovskite-based catalyst particle and a perovskite-based binder, and wherein the perovskite-based catalyst particle and the perovskite-based binder each independently include a compound represented by Chemical Formula 1 above.

EP 4 442 360 A1

## Description

[Technical Field]

This application claims priority to and the benefit of Korean Patent Application No. 10-2022-0146236 filed in the Korean Intellectual Property Office on November 4, 2022, the entire contents of which are incorporated herein by reference.

The present application relates to a catalyst for methane reformation and a method for manufacturing the same.

[Background Art]

As part of efforts to reduce greenhouse gases caused by global warming, much research is underway on carbon dioxide conversion technologies. A carbon dioxide reforming reaction, one of the carbon dioxide conversion technologies, is a technology that produces a synthesis gas composed of hydrogen and carbon monoxide by reacting methane and carbon dioxide.

The synthesis gas is a material with high development value as a raw material for various downstream applications. As a method for industrially obtaining the synthesis gas ($H_2$/CO), a reforming reaction of natural gas may be largely divided into a steam reforming process, a carbon dioxide ($CO_2$) reforming process, a catalytic partial oxidation process, an autothermal reforming process, a tri-reforming process, such as the following Reaction Schemes 1 to 5, and the like.

[Reaction Scheme 1] $\quad$ $CH_4 + H_2O \rightarrow 3H_2 + CO$ $\Delta H$ = 226 kJ/mol

[Reaction Scheme 2] $\quad$ $CH_4 + CO_2 \rightarrow 2H_2 + 2CO$ $\Delta H$ = 261 kJ/mol

[Reaction Scheme 3] $\quad$ $CH_4 + 0.5O_2 \rightarrow 2H_2 + CO$ $\Delta H$ = -44 kJ/mol

[Reaction Scheme 4] $\quad$ autothermal reforming: Reaction Scheme 1 + Reaction Scheme 3

[Reaction Scheme 5] $\quad$ tri-reforming: Reaction Scheme 1 + Reaction Scheme 2 + Reaction Scheme 3

Meanwhile, various catalysts may be used for reforming activity in the reforming process. Among them, when noble metal catalysts are used in the reforming process, there is an advantage in that relatively less carbon deposition occurs compared to nickel-based catalysts, resulting in higher reaction efficiency, but there is a problem in that the economic efficiency deteriorates because the noble metal catalysts are expensive.

Accordingly, nickel catalysts, which are relatively inexpensive, are usually used in the reforming process. In particular, as the nickel catalyst, a catalyst in which nickel metal is supported on a support such as alumina is widely used as a commercial catalyst. However, in such a case, there is a problem in that the nickel catalyst is deactivated by carbon that is inevitably produced on a surface of the nickel catalyst.

Therefore, there is a need in the technical field to develop a catalyst that is resistant to carbon deposition and can be effectively applied to the methane reforming process.

Prior Art Document

Korean Patent Application Publication No. 10-2019-0076367

[Detailed Description of the Invention]

[Technical Problem]

The present application has been made in an effort to provide a catalyst for methane reformation and a method for manufacturing the same.

[Technical Solution]

An exemplary embodiment of the present application provides a catalyst for methane reformation, including: a porous metal support; a primary coating layer provided on the porous metal support; and a secondary coating layer provided on the primary coating layer, wherein the primary coating layer includes a perovskite-based compound with a coefficient of thermal expansion of 65% or greater compared to a coefficient of thermal expansion of the porous metal support, wherein the secondary coating layer includes a perovskite-based catalyst particle and a perovskite-based binder, and wherein the perovskite-based catalyst particle and the perovskite-based binder each independently include a compound represented by the following Chemical Formula 1.

In addition, another exemplary embodiment of the present application provides a method for manufacturing a catalyst for methane reformation, the method including: performing primary coating on a porous metal support with a first slurry including a perovskite-based compound with a coefficient of thermal expansion of 65% or greater compared to a coefficient of thermal expansion of the porous metal support; and

performing secondary coating with a second slurry including a perovskite-based catalyst particle and a perovskite-based binder after the primary coating, wherein the perovskite-based catalyst particle and the perovskite-based binder each independently include a compound represented by the following Chemical Formula 1.

[Chemical Formula 1]        $Sr_{1-x}A_xTi_{1-y}B_yO_{3-\delta}$

in Chemical Formula 1,

A is Y, La or Ba,
B is Ni, Co, Fe, Mn, Cr, Mo, Ru or Rh,
x is $0 \leq x < 1$,
y is $0 \leq y < 0.5$,
$\delta$ is a value that satisfies balance, $0 \leq \delta < 1$, and
the x and y satisfy $x + y > 0$.

[Advantageous Effects]

The catalyst for methane reformation according to an exemplary embodiment of the present application includes a perovskite-based compound with a coefficient of thermal expansion of 65% or greater compared to a coefficient of thermal expansion of a porous metal support, whereby reactivity of the porous metal support itself that can cause a side reaction or coke can be suppressed and adhesion of the catalyst component at high temperatures is improved.

In addition, the secondary coating layer may be formed in the form of perovskite nanoparticles by coating the perovskite-based catalyst particle component directly on the porous metal support without a separate binder. Accordingly, an active surface area of the catalyst for methane reformation can be increased.

Due to these characteristics, the active surface area of the catalyst for methane reformation is increased, good activity can be exhibited even at a high space velocity during a methane reforming reaction, and a long-term stable operation is possible without carbon deposition or sintering.

[Best Mode]

Hereinafter, the present specification will be described in more detail.

Throughout the present specification, when a member is referred to as being "on" another member, the member can be in direct contact with another member or an intervening member may also be present.

In the present specification, when a part is referred to as "including" a certain component, it means that the part can further include another component, not excluding another component, unless explicitly described to the contrary.

In the present specification, "p to q" means a range of "p or more and q or less".

In the present specification, the "coefficient of thermal expansion" refers to one value of lengths of a certain object stretched in three directions of an x-axis, a y-axis, and a z-axis when a temperature of the object is increased by 1°C at temperatures of 25°C to 800°C.

In the present specification, the "perovskite-based catalyst particle" refers to a catalyst in the form of particle rather than a sol among catalysts having a perovskite structure. That is, it means a state in which the catalyst is not dissolved in a separate solvent.

In the present specification, the "perovskite-based compound" refers to a compound that has a perovskite structure but does not function as a catalyst.

In the present specification, the "perovskite-based binder" refers to a material formed from the perovskite-based catalyst sol formed from a solution including a precursor of the perovskite-based compound and a solvent.

Currently, catalysts that are widely used in the field of reformers are mainly powder-type catalysts and pellet-type support catalysts. Although the powder-type catalyst may have excellent performance due to excellent dispersion degree of the catalyst, it is difficult to directly use the powder-type catalyst in the industry. For example, when a reformer is driven using the powder-type catalyst, the catalyst comes out together with a material produced after a reaction. In this case, a phenomenon may occur in which the catalyst in the form of powder gradually accumulates in a stream tube at an exit portion, and eventually, blocks the entire tube. Therefore, there is a disadvantage in that the powder-type catalysts cannot be used for commercial reformers used in the industry.

In addition, the pellet-type support catalyst is currently frequently used for industrial reformers. Due to limitations in mass transfer rate, the performance deteriorates compared to the powder-type catalyst only in terms of the catalyst performance, but there is an advantage in that the pellet-type support catalyst can be used for a long period of time because a support is used. However, a $\gamma$-$Al_2O_3$ pellet, which is often used as the pellet-type support catalyst, has a weak structural strength, and thus may be easily broken, and accordingly, there is a disadvantage in that a differential pressure is generated in a reactor. In addition, due to the characteristics of the pellet-type support catalyst, the volume is large, so when used for a high-capacity reformer, the volume becomes significantly larger. Further, all reforming reactions are sensitive to reaction temperature, but the existing pellet-type catalyst has a very low thermal conductivity, and thus, is disadvantageous in that heat is not evenly distributed throughout the reactor.

Accordingly, the present application has been intended to alleviate a phenomenon of blocking the stream tube, which is a disadvantage of the powder-type, and to improve the heat and mass transfer rates, which are a common disadvantage of the powder-type and the pellet-type, through a method of coating a porous metal support catalyst having high heat and mass transfer rates with a catalyst.

The porous metal support catalyst may be prepared by coating a surface of a porous metal support with a slurry prepared by mixing a catalyst precursor or catalyst powder, a binder, an additive, and the like. In order to introduce catalyst particles onto the surface of the porous metal support, an organic binder and/or an inorganic binder may be added and used when preparing the slurry. The organic binder remains in the slurry until drying and firing processes and can contribute to reduction in surface tension and stabilization of the slurry. The inorganic binder remains between catalyst particles or between catalyst particles and the porous metal support after the firing process to serve to fix the catalyst particles on the porous metal support, and may be usually used by adding silica, alumina sol or colloidal form. When a large amount of the inorganic binder is used, there is an advantage of strengthening a bond between the catalyst particles and the porous metal support. However, on the other hand, the presence of a large amount of binder on the surface of the catalyst particle may reduce the number of reaction sites, and the binder may affect the catalyst phase. At the same time, the binder may also participate in the reaction to induce undesired side reactions. Accordingly, the catalyst precursor is directly used for the purpose of immediately introducing the catalyst onto the porous metal support without a binder in some cases. However, in this case, there is a disadvantage in that an amount of catalyst supported at one time is small.

Accordingly, the present application intends to provide a catalyst for methane reformation capable of supporting a large amount of catalyst at one time and suppressing side reactions caused by a binder.

An exemplary embodiment of the present application provides a catalyst for methane reformation, including: a porous metal support; a primary coating layer provided on the porous metal support; and a secondary coating layer provided on the primary coating layer, wherein the primary coating layer includes a perovskite-based compound with a coefficient of thermal expansion of 65% or greater compared to a coefficient of thermal expansion of the porous metal support, wherein the secondary coating layer includes a perovskite-based catalyst particle and a perovskite-based binder, and wherein the perovskite-based catalyst particle and the perovskite-based binder each independently include a compound represented by the following Chemical Formula 1.

[Chemical Formula 1] $\quad\quad Sr_{1-x}A_xTi_{1-y}B_yO_{3-\delta}$

in Chemical Formula 1,

A is Y, La or Ba,
B is Ni, Co, Fe, Mn, Cr, Mo, Ru or Rh,
x is $0 \leq x < 1$,
y is $0 \leq y < 0.5$,
$\delta$ is a value that satisfies balance, $0 \leq \delta < 1$, and
the x and y satisfy $x + y > 0$.

The catalyst for methane reformation according to the present application includes, on a coating layer, a perovskite-based compound with a coefficient of thermal expansion of 65% or greater compared to a coefficient of thermal expansion of a porous metal support, whereby reactivity of the porous metal support itself that can cause a side reaction or coke can be suppressed and adhesion of the catalyst component at high temperatures can be improved.

In addition, the secondary coating layer may be formed in the form of perovskite nanoparticles by coating the perovskite-based catalyst particle component directly on the porous metal support without a separate binder. Accordingly, an active surface area of the catalyst for methane reformation can be increased.

Due to these characteristics, the active surface area of the catalyst for methane reformation is increased, good activity can be exhibited even at a high space velocity during a methane reforming reaction, and a long-term stable operation is possible without carbon deposition or sintering.

In an exemplary embodiment of the present application, the primary coating layer may include a perovskite-based compound with a coefficient of thermal expansion of 65% or greater compared to a coefficient of thermal expansion of the porous metal support.

In an exemplary embodiment of the present application, the coefficient of thermal expansion of the perovskite-based compound with the coefficient of thermal expansion of 65% or greater compared to the coefficient of thermal expansion of the porous metal support may satisfy the following equation 1.

$$[\text{Equation 1}]$$

$$10.0 \times 10^{-6} \text{K}^{-1} \leq G1 \leq 14.0 \times 10^{-6} \text{K}^{-1}$$

In Equation 1 above, G1 refers to a coefficient of thermal expansion.

In an exemplary embodiment of the present application, G1 may be $10.0 \times 10^{-6} \text{K}^{-1} \leq G1 \leq 14.0 \times 10^{-6} \text{K}^{-1}$, preferably, $10.0 \times 10^{-6} \text{K}^{-1} \leq G1 \leq 13.0 \times 10^{-6} \text{K}^{-1}$.

In an exemplary embodiment of the present application, a content of the perovskite-based compound with the coefficient of thermal expansion of 65% or greater compared to the coefficient of thermal expansion of the porous metal support may be 1% by weight to 20% by weight or 1.5% by weight to 18% by weight based on a total weight of the catalyst for methane reformation. When the above content range is satisfied, the performance of the catalyst for methane reformation according to the present application can be further improved, such as suppressing reactivity of the porous metal support itself, which can cause side reactions or coke, and improving adhesion of the catalyst component at high temperatures.

Specifically, if the content of the perovskite-based compound with the coefficient of thermal expansion of 65% or greater compared to the coefficient of thermal expansion of the porous metal support exceeds 20% by weight, it is not desirable because the ability to coat the secondary coating layer (catalyst layer) may be reduced and the activity of the catalyst compared to the volume of the porous metal support may be lowered. In addition, if the content of the perovskite-based compound with the coefficient of thermal expansion of 65% or greater compared to the coefficient of thermal expansion of the porous metal support is less than 1% by weight, the content is so small that it may be difficult to obtain the effect of the primary coating layer.

In an exemplary embodiment of the present application, the perovskite-based compound with the coefficient of thermal expansion of 65% or greater compared to the coefficient of thermal expansion of the porous metal support may be represented by the following Chemical Formula 3.

[Chemical Formula 3]     $Sr_{1-a}Y_aTiO_{3-\delta}$

in Chemical Formula 3,

a is $0 \leq a < 1$, and
$\delta$ is a value that satisfies balance, and $0 \leq \delta \leq 1$.

In an exemplary embodiment of the present application, the perovskite-based compound with the coefficient of thermal expansion of 65% or greater compared to the coefficient of thermal expansion of the porous metal support may be the following Chemical Formula 3-1 or $SrTiO_3$.

[Chemical Formula 3-1]     $Sr_{1-a}Y_aTiO_{3-\delta}$

in Chemical Formula 3,

a is $0 < a < 1$, and
$\delta$ is a value that satisfies balance, and $0 \leq \delta < 1$.

In an exemplary embodiment of the present application, the Chemical Formula 1 may be represented by the following Chemical Formula 2.

[Chemical Formula 2]     $Sr_{1-x}Y_xTi_{1-y}B_yO_{3-\delta}$

in Chemical Formula 2,

B is Ni, Co, Fe, Mn, Cr, Mo, Ru or Rh,
x is $0 \leq x < 0.3$,
y is $0 \leq y < 0.2$,
$\delta$ is a value that satisfies balance, $0 \leq \delta < 1$, and
the x and y satisfy x + y > 0.

In an exemplary embodiment of the present application, B in Chemical Formula 2 may be Ni or Ru.

In an exemplary embodiment of the present application, the porous metal support may include a material that can maintain thermal stability at high temperatures of 800°C or higher. More specifically, in an exemplary embodiment of the present application, the porous metal support may be made of a material that can maintain thermal stability at high temperatures of 800°C or higher.

In an exemplary embodiment of the present application, the porous metal support may include one or more selected from NiCrAlFe, NiCrAl, stainless steel, and inconel. More specifically, in an exemplary embodiment of the present application, the porous metal support may be made of one or more selected from NiCrAlFe, NiCrAl, stainless steel, and inconel.

The porous metal support is a support having various shapes and has a small heat capacity and an excellent heat transfer ability, so it can be molded into a desired shape and used. The shape and size of the porous metal support are not particularly limited, and a porosity of the porous metal support may be 10% to 99%, and preferably 50% to 96%. An average pore size of the porous metal support may be 150 $\mu$m to 4,000 $\mu$m, 200 $\mu$m to 3,500 $\mu$m, or 400 $\mu$m to 3,000 $\mu$m. Most preferably, it may be 700 $\mu$m to 2,000 $\mu$m. The porous metal support can be appropriately manufactured by one skilled in the art using methods known in the art, taking into account the material, pore size, porosity, and the like of the porous metal support described above.

In an exemplary embodiment of the present application, a content of the perovskite-based catalyst particle and perovskite-based binder may be 3% by weight to 40% by weight, 6% by weight to 35% by weight, or 7% by weight to 30% by weight, based on a total weight of the catalyst for methane reformation. Based on the total weight of the catalyst for methane reformation, if the content of the perovskite-based catalyst particle and perovskite-based binder is less than 3% by weight, it is not desirable because the reactivity may decrease due to the relatively small number of active sites on the surface of the catalyst. In addition, if the content of the perovskite-based catalyst particle and perovskite-base binder exceeds 40% by weight, a relatively large amount of catalyst component compared to the porous metal support is contained, so that it is difficult to maintain the pore structure and it is not easy to combine the catalyst component and the porous metal support, resulting in a reduction in the practical benefit of the methane reforming reaction.

Here, the content of the perovskite-based catalyst particle and perovskite-based binder refers to a sum of a content of the perovskite-based catalyst particle and a content of the perovskite-based binder.

In an exemplary embodiment of the present application, at least a portion of the surface of the catalyst particle may include a protrusion shape. The protrusion shape may be spherical, elliptical, or a combination thereof, but is not limited thereto. Each of the protrusions may have an average diameter of 20 nm to 1 $\mu$m. The protrusions may cover the entire surface of the catalyst particle, or may cover only a portion of the surface of the catalyst particle.

In an exemplary embodiment of the present application, the perovskite-based binder is an inorganic binder, and may serve to fix the perovskite-based catalyst particle on the porous metal support. In addition, the perovskite-based binder may be present in the form of protrusion on the perovskite-based catalyst particle, thereby increasing a reaction surface area of the catalyst to improve the performance of the methane reforming reaction.

Further, according to an exemplary embodiment of the present application, by additionally applying the perovskite-based binder in addition to the perovskite-based catalyst particle, a content of catalyst that is supported when coated on the porous metal support once can be increased, as compared with a case where the catalyst particle is applied alone. Further, by applying the perovskite-based binder according to an exemplary embodiment of the present application, it is possible to prevent a side reaction or a catalyst phase change that may occur when applying silica or another colloidal inorganic binder, thereby improving the performance of the methane reforming reaction.

In an exemplary embodiment of the present application, the catalyst for methane reformation may be applied to a steam reforming process, a carbon dioxide ($CO_2$) reforming process, a catalytic partial oxidation process, an autothermal reforming process, a tri-reforming process or a mixed reforming process, and the methane reforming process is not particularly limited.

An exemplary embodiment of the present application provides a method for manufacturing a catalyst for methane reformation, the method including: performing primary coating on a porous metal support with a first slurry including a perovskite-based compound with a coefficient of thermal expansion of 65% or greater compared to a coefficient of thermal expansion of the porous metal support; and performing secondary coating with a second slurry including a perovskite-based catalyst particle and a perovskite-based binder after the primary coating, wherein the perovskite-based catalyst particle and the perovskite-based binder each independently include a compound represented by the Chemical Formula 1 above.

As described above, the method for manufacturing a catalyst for methane reformation according to an exemplary embodiment of the present application can manufacture a catalyst for methane reformation in which the reactivity of the porous metal support itself, which can cause side reactions or coke, is suppressed and the adhesion of the catalyst component is improved.

In addition, when forming the secondary coating layer, the perovskite-based catalyst particle component can be directly coated on the porous metal support without a separate binder, so the perovskite-based catalyst component can be formed in the form of nanoparticles. Accordingly, the active surface area of the catalyst for methane reformation manufactured according to the method for manufacturing a catalyst for methane reformation according to an exemplary embodiment of the present application can be increased.

Due to these characteristics, the manufactured catalyst for methane reformation has such features that the active surface area is increased, good activity can be exhibited even at a high space velocity during a methane reforming reaction, and a long-term stable operation is possible without carbon deposition or sintering.

In the method for manufacturing a catalyst for methane reformation according to an exemplary embodiment of the present application, details on the porous metal support, the perovskite-based compound, the perovskite-based catalyst particle, and the perovskite-based binder are the same as those described above.

In particular, the perovskite-based binder of the catalyst for methane reformation may be formed from the perovskite-based catalyst sol.

As described above, the perovskite-based catalyst sol may be formed from a solution including a precursor of the perovskite-based compound and a solvent. The precursor of the perovskite-based compound is a precursor of metal constituting the perovskite-based compound, and a metal molar ratio of the perovskite-based compound may be adjusted by adjusting the content thereof. In addition, the precursor of the metal is not particularly limited, and ammonium salts, nitrates, carbonates, chlorides, lactates, hydroxides, organic acid salts, oxides of the metal elements, or mixtures thereof may be applied in combination. The solvent is not particularly limited, and any solvent known in the art may be used. For example, as the solvent, water, an alcohol-based solvent, or the like may be applied, but the solvent is not limited thereto.

The method for manufacturing a catalyst for methane reformation according to an exemplary embodiment of the present application may further include preparing a first slurry including the perovskite-based compound with the coefficient of thermal expansion of 65% or greater compared to the coefficient of thermal expansion of the porous metal support.

In an exemplary embodiment of the present application, the first slurry may include the perovskite-based compound with the coefficient of thermal expansion of 65% or greater compared to the coefficient of thermal expansion of the porous metal support, in the form of powder.

In an exemplary embodiment of the present application, the first slurry may not include a binder. The binder may be an organic binder and/or an inorganic binder. That is, a binder may not be used for the purpose of directly introducing the perovskite-based compound with the coefficient of thermal expansion of 65% or greater compared to the coefficient of thermal expansion of the porous metal support onto the porous support.

In an exemplary embodiment of the present application, the first slurry may be mixed with an additive, in addition to the perovskite-based compound in the form of powder with the coefficient of thermal expansion of 65% or greater compared to the coefficient of thermal expansion of the porous metal support. As a type of additive, materials commonly used in the relevant field may be used.

In an exemplary embodiment of the present application, a content of the perovskite-based compound with the coefficient of thermal expansion of 65% or greater compared to the coefficient of thermal expansion of the porous metal support is 1% by weight to 20% by weight or 1.5% by weight to 18% by weight based on a total weight of the first slurry. When the above content range is satisfied, the performance of the catalyst for methane reformation according to the present application can be further improved, such as suppressing reactivity of the porous metal support itself, which can cause side reactions or coke, and improving adhesion of the catalyst component at high temperatures.

As described above, if the content of the perovskite-based compound with the coefficient of thermal expansion of 65% or greater compared to the coefficient of thermal expansion of the porous metal support exceeds 20% by weight, it is not desirable because the ability to coat the secondary coating layer (catalyst layer) may be reduced and the activity of the catalyst compared to the volume of the porous metal support may be lowered. In addition, if the content of the perovskite-based compound with the coefficient of thermal expansion of 65% or greater compared to the coefficient of thermal expansion of the porous metal support is less than 1% by weight, the content is so small that it may be difficult to obtain the effect of the primary coating layer.

The method for manufacturing a catalyst for methane reformation according to an exemplary embodiment of the present application may further include preparing the second slurry including the perovskite-based catalyst particle and the perovskite-based binder.

In an exemplary embodiment of the present application, the second slurry may include the perovskite-based catalyst particle in the form of powder. In an exemplary embodiment of the present application, the second slurry may include a binder. The binder may be an organic binder and/or an inorganic binder.

In an exemplary embodiment of the present application, the second slurry may be mixed with an additive, in addition to the perovskite-based catalyst particle and the perovskite-based binder. As a type of the additive, materials commonly used in the relevant field may be used.

The method for manufacturing a catalyst for methane reformation according to an exemplary embodiment of the present application includes performing primary coating on a porous metal support with a first slurry including a perovskite-based compound with a coefficient of thermal expansion of 65% or greater compared to a coefficient of thermal expansion of the porous metal support.

The method for manufacturing a catalyst for methane reformation according to an exemplary embodiment of the present application includes performing secondary coating with a second slurry including a perovskite-based catalyst particle and a perovskite-based binder after the primary coating.

In an exemplary embodiment of the present application, the step of preparing the second slurry including the perovskite-based catalyst particle and the perovskite-based binder includes producing the second slurry by mixing the perovskite-based catalyst particle and a perovskite-based catalyst sol. The above description can be applied to the perovskite-based catalyst sol, and in order to control a concentration of the second slurry, a solvent used in the preparation of the perovskite-based catalyst sol may be additionally added.

In the method for manufacturing a catalyst for methane reformation according to an exemplary embodiment of the present application, the step of performing primary coating with the first slurry and the step of performing secondary coating with the second slurry each include impregnating the porous metal support in the first slurry or second slurry. In this case, the method may further include removing excess slurry from the porous metal support.

In an exemplary embodiment of the present application, the step of performing primary coating with the first slurry may be a step of impregnating the porous metal support with the first slurry.

In an exemplary embodiment of the present application, the step of performing second coating with the second slurry may be a step of impregnating the porous metal support with the second slurry.

In an exemplary embodiment of the present application, a concentration of the perovskite-based binder represented by the Chemical Formula 1 above may be 0.05M to 1M, preferably 0.08M to 1M, more preferably 0.1M to 1M, and most preferably 0.1M to 0.8M.

As the coating method of the primary coating step and the secondary coating step, a method known in the art, for example, dip-coating, wash-coating, or the like may be used, but the coating method is not limited thereto.

The method for manufacturing a catalyst for methane reformation according to an exemplary embodiment of the present application further includes performing drying and firing after the secondary coating step. That is, the method further comprises performing drying and firing after the primary coating and the secondary coating are completed.

In this case, the drying may be performed at temperatures of 50°C to 150°C for 1 to 48 hours or at temperatures of 60°C to 100°C for 5 to 36 hours, but the conditions are not limited thereto.

In addition, the firing may be performed at temperatures of 350°C to 1,100°C for 1 to 10 hours under air atmosphere, or at temperatures of 500°C to 1,000°C for 1.5 to 8 hours under air atmosphere, but the conditions are not limited thereto.

In the method for manufacturing a catalyst for methane reformation according to an exemplary embodiment of the present application, details on the porous metal support, the perovskite-based catalyst component, and the like are the same as those described above.

The catalyst for methane reformation according to an exemplary embodiment of the present application supports the catalyst component on the porous metal support with high thermal conductivity, so it has such features that good activity can be exhibited even at a high space velocity during a methane reforming reaction and a long-term stable operation is possible without carbon deposition or sintering.

In an exemplary embodiment of the present application, the catalyst may be applied to a steam reforming process, a carbon dioxide ($CO_2$) reforming process, a catalytic partial oxidation process, an autothermal reforming process, a tri-reforming process or a mixed reforming process, and the methane reforming process is not particularly limited.

In an exemplary embodiment of the present application, the methane reforming process may include bringing a mixed raw material into contact with the catalyst according to the present application. The mixed raw material may be one including $CH_4$ and $CO_2$.

In an exemplary embodiment of the present application, the methane reforming process may include bringing a mixed raw material into contact with the catalyst according to the present application inside a reactor. The mixed raw material may be one including $CH_4$ and $CO_2$. The reactor may be a reactor commonly used in the relevant field.

In an exemplary embodiment of the present application, the methane reforming process may further include filling the reactor with the catalyst according to the present application; and subjecting the reactor filled with the catalyst to reduction condition of $H_2/N_2$.

In an exemplary embodiment of the present application, the step of subjecting the reactor filled with the catalyst to reduction condition of $H_2/N_2$ may include performing reduction at temperatures of 700°C to 800°C for 1 to 2 hours under condition of $H_2/N_2$.

In an exemplary embodiment of the present application, the condition of $H_2/N_2$ refers to a volume ratio of a volume of hydrogen ($H_2$) to a volume of nitrogen ($N_2$), and $H_2/N_2$ may satisfy 5% to 12%, and preferably 10%.

In an exemplary embodiment of the present application, for the methane reforming process, a commonly used methane reforming process except for using the catalyst for methane reformation of the present application may be applied.

Mode for Invention

Below, Examples will be described in detail for specifically describing the present application. However, the Examples according to the present application may be modified in other forms, and the scope of the present application is not construed as being limited to the Examples described in detail below. The Examples of the present application are provided to more completely explain the present application to one skilled in the art.

<Examples>

**1) Example** 1 - **Preparation of catalyst for methane reformation**

**(1) <Preparation Example** 1> - **Preparation of primary coating layer**

A $SrTiO_3$(a=0 and $\delta$=0 in $Sr_{1-a}Y_aTiO_{3-\delta}$ that is the Chemical Formula 3 of the present application) solution was prepared by the citrate method. Specifically, strontium nitrate ($Sr(NO_3)_3H_2O$) and yttrium(III) nitrate hexahydrate were dissolved in distilled water together with citric acid and ethylene glycol. After titanium isopropoxide ($Ti(OCH(CH_3)_2)_4$) was dissolved in ethanol, the two solutions were mixed at 70°C. Thereafter, the mixture was stirred for 3 hours to prepare a first solution (hereinafter, referred to as first slurry) containing $SrTiO_3$ (a=0 and $\delta$=0 in $Sr_{1-a}A_aTiO_{3-\delta}$).

Subsequently, a porous metal support (NiFeCrAl) with a pore size of 800 $\mu$m was dip-coated with the first slurry solution (primary coating). Thereafter, the porous metal support was dried at 70°C for 24 hours, and then heat-treated at 300°C to 900°C for 3 hours under air atmosphere to prepare a porous metal support (NiFeCrAl) coated with $SrTiO_3$ as a primary coating layer.

In this case, the content of $SrTiO_3$ was 7wt% based on the total weight of the primary coating layer.

**(2) <Preparation Example 2> - Preparation of secondary coating layer**

Perovskite-based catalyst particles represented by $SrTi_{0.90}Ni_{0.1}O_{3-\delta}$ (B is Ni, x=0, and y=0.1 in $Sr_{1-x}A_xTi_{1-y}B_yO_{3-\delta}$ that is Chemical Formula 1 of the present application) and perovskite-based catalyst particles represented by $SrTi_{0.97}Ni_{0.03}O_{3-\delta}$(B is Ni, x=0, and y=0.03 in $Sr_{1-x}A_xTi_{1-y}B_yO_{3-\delta}$ that is Chemical Formula 1 of the present application) were prepared by the citrate method.

Specifically, a solution containing a perovskite-based compound represented by $SrTi_{0.90}Ni_{0.1}O_{3-\delta}$ and a solution containing a perovskite compound represented by $SrTi_{0.97}Ni_{0.03}O_{3-\delta}$ were prepared, respectively, in the same manner as Preparation Example 1, except that in Preparation Example 1, a first solution was prepared by adding a certain amount of nickel nitrate ($Ni(NO_3)_2$) so that the content of nickel (Ni) and the content of titanium (Ti) were 10 mol% and 3 mol% compared to the sum of nickel (Ni) and titanium (Ti), respectively.

The solution containing the perovskite-based compound represented by $SrTi_{0.90}Ni_{0.1}O_{3-\delta}$ prepared by the above method was dried at 70°C for 24 hours and then heat-treated at 900°C for 3 hours in an air atmosphere to prepare perovskite-based catalyst particles represented by $SrTi_{0.90}Ni_{0.1}O_{3-\delta}$.

In addition, the solution containing the perovskite-based compound represented by $SrTi_{0.97}Ni_{0.03}O_{3-\delta}$ prepared by the above method was added with water so that the concentration of the perovskite-based compound represented by $SrTi_{0.97}Ni_{0.03}O_{3-\delta}$ became 0.25M, and mixed to prepare a perovskite-based binder represented by $SrTi_{0.97}Ni_{0.03}O_{3-\delta}$.

In this case, a second solution (hereinafter, a second slurry) was prepared by mixing the perovskite-based catalyst particles and the perovskite-based binder so that the content of the perovskite-based catalyst particles became 5wt% based on the total amount of the perovskite-based catalyst particles and the perovskite-based binder.

Subsequently, the porous metal support (NiFeCrAl) coated with $SrTiO_3$ as the primary coating layer of Preparation Example 1 was dip-coated with the second slurry (secondary coating), and then excess slurry was removed from the porous metal support using a blower.

Thereafter, the porous metal support was dried at 70°C for 1 hour to remove the solvent component, and then heat-treated at 900°C for 5 hours under air atmosphere to prepare a catalyst for methane reformation including the primary coating layer including $SrTiO_3$ and the secondary coating layer including the perovskite-based catalyst particles represented by $SrTi_{0.90}Ni_{0.1}O_{3-\delta}$ and the perovskite-based catalyst binder represented by $SrTi_{0.97}Ni_{0.03}O_{3-\delta}$. In this case, the amount of catalyst coated once was 3.5 wt%, and the secondary coating was repeated to finally prepare the catalyst for methane reformation of Example 1 (content of the supported catalyst based on the total weight of the catalyst for methane reformation: 14.8%).

Information on the type of porous metal support used in Example 1, the material included in the primary coating layer and the material included in the secondary coating layer, and information on the content of the support catalyst based on the total weight of the catalyst for methane reformation, are listed in Table 1 below.

**2) Examples 2 to 9 and Comparative Examples 1 to 10**

Catalysts of Examples 2 to 9 and Comparative Examples 1 to 10 were prepared, respectively, in the same manner as Example 1, except that in the preparation method of a catalyst for methane reformation of Example 1, the catalysts were prepared to have the contents of the catalysts listed in Table 1 below by using the porous metal supports listed in Table 1 below as the porous metal support and the materials listed in Table 1 below as the materials of the primary coating layer and the secondary coating layer.

For example, Comparative Example 4 can be construed as having a porous metal support (NiFeCrAl) that is not formed with the primary coating layer and the secondary coating layer.

For reference, in Table 1 below, materials A and B used for the primary coating layer and the secondary coating layer were prepared by the citrate method used in Preparation Example 1 or Preparation Example 2. Specifically, when applying the citrate method, a solution prepared to satisfy each composition ratio was used. When adding yttrium (Y), yttrium nitrate ($Y(NO_3)_2$) was added, and when adding ruthenium (Ru), ruthenium chloride monohydrate ($RuCl_3H_2O$) was added.

[Table 1]

| | Porous metal support | | Primary coating layer | |
|---|---|---|---|---|
| | Type | Pore size ($\mu$m) | Material A | Content A (wt%) |
| Example 1 | NiFeCrAl | 800 | $SrTiO_3$ | 7 |
| Example 2 | NiFeCrAl | 1200 | $SrTiO_3$ | 10 |
| Example 3 | NiFeCrAl | 1200 | $Sr_{0.9}Y_{0.1}TiO_3$ | 5 |
| Example 4 | NiFeCrAl | 1200 | $Sr_{0.85}Y_{0.15}TiO_3$ | 15 |
| Example 5 | NiCrAl | 800 | $SrTiO_3$ | 3 |
| Example 6 | NiCrAl | 1200 | $Sr_{0.95}Y_{0.05}TiO_3$ | 5 |
| Example 7 | NiCrAl | 1500 | $Sr_{0.9}Y_{0.1}TiO_3$ | 10 |
| Example 8 | NiFeCrAl | 1200 | $SrTiO_3$ | 15 |
| Example 9 | NiCrAl | 1500 | $Sr_{0.9}Y_{0.1}TiO_3$ | 20 |
| Comparative Example 1 | NiFeCrAl | 800 | $SrTiO_3$ | 7 |

EP 4 442 360 A1

(continued)

| | Porous metal support | | | Primary coating layer | |
|---|---|---|---|---|---|
| | Type | | Pore size ($\mu$m) | Material A | Content A (wt%) |
| Comparative Example 2 | NiCrAl | | 1200 | $SrTi_{0.97}Ni_{0.03}O_{3-\delta}$ | 15.3 |
| Comparative Example 3 | NiCrAl | | 1200 | $Al_2O_3$ | 10 |
| Comparative Example 4 | NiFeCrAl | | 800 | - | - |
| Comparative Example 5 | NiFeCrAl | | 800 | - | - |
| Comparative Example 6 | NiFeCrAl | | 800 | $SrTiO_3$ | 7 |
| Comparative Example 7 | NiFeCrAl | | 1200 | $SrTiO_3$ | 10 |
| Comparative Example 8 | NiFeCrAl | 800 | | $SrTiO_3$ | 7 |
| Comparative Example 9 | NiFeCrAl | 1200 | | $SrTiO_3$ | 10 |
| Comparative Example 10 | NiFeCrAl | 800 | | $Al_2O_3$ | 7 |

| | Secondary coating layer (Nth coating) | | | | | Supported amount during one coating (%) | Content of catalyst [%] |
|---|---|---|---|---|---|---|---|
| | Catalyst particle | | Binder | | | | |
| | Material B | Content B (wt%) | Type | Concentration (M) | Solvent | | |
| Example 1 | $SrTi_{0.90}Ni_{0.1}O_{3-\delta}$ | 5 | $SrTi_{0.97}Ni_{0.03}O_{3-\delta}$ | 0.25 | water | 3.7 | 14.8 |
| Example 2 | $SrTi_{0.95}Ni_{0.05}O_{3-\delta}$ | 20 | $SrTi_{0.97}Ru_{0.03}O_{3-\delta}$ | 0.1 | water | 3.3 | 16.5 |
| Example 3 | $Sr_{0.9}Y_{0.1}Ti_{0.9}Ru_{0.1}O_{3-\delta}$ | 10 | $Sr_{0.9}Y_{0.1}Ti_{0.95}Ni_{0.05}O_{3-\delta}$ | 0.4 | ethanol | 10.5 | 21.0 |
| Example 4 | $Sr_{0.85}Y_{0.15}Ti_{0.85}Ni_{0.15}O_{3-\delta}$ | 15 | $Sr_{0.95}Y_{0.05}Ti_{0.93}Ni_{0.07}O_{3-\delta}$ | 0.6 | water | 13.2 | 13.2 |
| Example 5 | $Sr_{0.9}Y_{0.1}Ti_{0.93}Ru_{0.7}O_{3-\delta}$ | 15 | $Sr_{0.9}Y_{0.1}Ti_{0.93}Ru_{0.7}O_{3-\delta}$ | 0.15 | water | 3.1 | 18.6 |
| Example 6 | $Sr_{0.85}Y_{0.15}Ti_{0.9}Ni_{0.1}O_{3-\delta}$ | 13 | $SrTi_{0.95}Ni_{0.05}O_{3-\delta}$ | 0.3 | ethanol | 9.1 | 18.2 |

(continued)

| | Secondary coating layer (Nth coating) | | | | | Supported amount during one coating (%) | Content of catalyst [%] |
| | Catalyst particle | | Binder | | | | |
| | Material B | Content B (wt%) | Type | Concentration (M) | Solvent | | |
|---|---|---|---|---|---|---|---|
| Example 7 | $SrTi_{0.94}Ni_{0.06}O_{3-\delta}$ | 10 | $Sr_{0.95}Y_{0.05}Ti_{0.95}Ni_{0.05}O_{3-\delta}$ | 0.1 | water | 3.4 | 17.0 |
| Example 8 | $Sr_{0.9}Y_{0.1}Ti_{0.9}Ni_{0.1}O_{3-\delta}$ | 10 | $Sr_{0.9}Y_{0.1}Ti_{0.95}Ni_{0.05}O_{3-\delta}$ | 0.3 | water | 4.5 | 18 |
| Example 9 | $Sr_{0.9}Y_{0.1}Ti_{0.85}Ni_{0.15}O_{3-\delta}$ | 5 | $Sr_{0.9}Y_{0.1}Ti_{0.85}Ni_{0.15}O_{3-\delta}$ | 0.25 | water | 3.2 | 16.0 |
| Comparative Example 1 | - | - | - | - | - | - | - |
| Comparative Example 2 | - | - | - | - | - | 1.3 | 15.3 |
| Comparative Example 3 | - | - | - | - | - | - | - |
| Comparative Example 4 | - | - | - | - | - | - | - |
| Comparative Example 5 | $SrTi_{0.97}Ni_{0.03}O_{3-\delta}$ | 10 | $SrTi_{0.97}Ni_{0.03}O_{3-\delta}$ | 0.3 | water | 4.8 | 14.4 |
| Comparative Example 6 | $SrTi_{0.2}Ni_{0.8}O_{3-\delta}$ | 5 | $SrTi_{0.97}Ni_{0.03}O_{3-\delta}$ | 0.25 | water | 3.6 | 14.4 |
| Comparative Example 7 | $SrTi_{0.95}Ni_{0.05}O_{3-\delta}$ | 20 | $SrTi_{0.4}Ru_{0.6}O_{3-\delta}$ | 0.1 | water | 3.5 | 17.5 |
| Comparative Example 8 | $SrTi_{0.90}Ni_{0.1}O_{3-\delta}$ | 5 | - | - | - | - | - |
| Comparative Example 9 | - | - | $SrTi_{0.97}Ru_{0.03}O_{3-\delta}$ | 0.3 | water | 0.8 | 16.8 |
| Comparative Example 10 | $SrTi_{0.90}Ni_{0.1}O_{3-\delta}$ | 5 | $SrTi_{0.97}Ni_{0.03}O_{3-\delta}$ | 0.25 | water | 3.6 | 14.4 |

In Table 1, material A corresponds to a perovskite-based compound, material B corresponds to perovskite-based catalyst particle, and the binder corresponds to a perovskite-based binder.

In Table 1, content A refers to the content (%) of material A in Table 1 included based on the total weight of the primary coating layer. Content B refers to the content of material B in Table 1 included based on the total amount of the perovskite-based catalyst particles and perovskite-based binder (total amount of the second slurry), and the content of catalyst refers to the content (%) of catalyst supported on the metal structure based on the total weight of the catalyst for methane reformation. Specifically, the supported catalyst refers to the amount of the perovskite-based compound supported on the metal structure.

In addition, the pore size in Table 1 refers to the average pore size.

Lastly, in Table 1, the supported amount (%) during one coating refers to the content (%) of the perovskite structure compound supported on the catalyst during one coating based on the total weight of the catalyst for methane reformation, in the process of repeatedly performing the coating of the secondary coating layer in order to satisfy the content of catalyst in Table 1, i.e., in order to satisfy the amount of the perovskite structure compound supported on the metal structure. In this case, the amount of the perovskite structure compound supported on the metal structure refers to a total of the perovskite-based compound of the primary coating layer and the perovskite structure compound included in the perovskite-based catalyst particles and perovskite-based binder included in the secondary coating layer.

Here, the perovskite structure compound refers to a compound satisfying the following Chemical Formula A.

[Chemical Formula A]  $Sr_{1-x}A_xTi_{1-y}B_yO_{3-\delta}$

wherein, in Chemical Formula A,

A is Y, La or Ba,
B is Ni, Co, Fe, Mn, Cr, Mo, Ru or Rh,
x is $0 \leq x < 1$,
y is $0 \leq y < 1$,
$\delta$ is a value that satisfies balance, $0 \leq \delta < 1$, and
the x and y satisfy $x + y > 0$.

Accordingly, in Table 1, in the case of Comparative Examples 1, 3, and 4 in which the compound represented by Chemical Formula A was not included in neither the primary coating layer nor the secondary coating layer, the supported amount (%) during one coating and the content of catalyst were not described, and in the case of Comparative Example 8 in which the compound represented by Chemical Formula A was included as catalyst particles (material B) in the secondary coating layer but no binder was included, so the secondary coating layer was not properly attached to the porous metal support and was thus not supported, the supported amount (%) during one coating and the content of the catalyst were not described.

In the case of Comparative Example 9 in which only a binder was included in the secondary coating layer, it can be confirmed that the supported amount (%) during one coating was very small, as compared with the Examples. That is, it could be confirmed that when the secondary coating layer includes only the binder according to the present application without the catalyst particles according to the present application, it takes a lot of time and cost to prepare the catalyst.

Thereafter, the durability of the catalysts of Examples and Comparative Examples in Table 1 were evaluated at 800°C that is a reaction temperature of the dry reforming reaction of methane. As a result, no cracks were found in the catalysts of Examples 1 to 9, but some cracks were found in the catalysts of Comparative Examples 2 to 5.

In this regard, referring to Table 2 below, regarding the materials used in the catalysts of the Examples of Table 1, it could be confirmed that the primary coating layer included the perovskite-based compound with a coefficient of thermal expansion of 65% or greater compared to a coefficient of thermal expansion of the porous metal support.

In addition, it could be confirmed that the perovskite-based compound with the coefficient of thermal expansion of 65% or greater compared to the coefficient of thermal expansion of the porous metal support satisfies the following Equation 1.

$$[Equation\ 1]$$

$$10.0 \times 10^{-6}K^{-1} \leq G1 \leq 14.0 \times 10^{-6}K^{-1}$$

in Equation 1, G1 refers to a coefficient of thermal expansion.

That is, it could be confirmed that the catalysts of Examples 1 to 9 had excellent durability at high temperatures because a difference between the coefficient of thermal expansion of the porous metal support and the coefficient of thermal expansion of the perovskite-based compound included in the primary coating layer was not large.

[Table 2]

| Material | Coefficient of thermal expansion ($10^{-6} \times$ 1/K) |
|---|---|
| $SrTiO_3$ | 12.2 |

(continued)

| Material | Coefficient of thermal expansion ($10^{-6} \times$ 1/K) |
|---|---|
| $Sr_{0.85}Y_{0.15}TiO_3$ | 11.3 |
| $Sr_{0.95}Y_{0.05}TiO_3$ | 11.1 |
| $Sr_{0.9}Y_{0.1}TiO_3$ | 10.9 |
| $Al_2O_3$ | 9.2 |
| NiCrAl | 15.9 |
| NiFeCrAl | 15.7 |

**<Experimental Example>** - **Evaluation of dry reforming reaction of methane**

A fixed-bed reactor system was introduced to carry out a dry reforming reaction of methane. A Quartz tube reactor (inner diameter = 1/2 inch, length = 50 cm) was used and packed with each catalyst for methane reformation (about 2 g) listed in Table 3 below.

After the catalyst underwent a reduction process at 800°C for 1 to 2 hours under conditions of 10% $H_2/N_2$, a catalytic reaction was performed for 100 hours.

Thereafter, the activity characteristics of the catalysts were evaluated while carrying out the reaction with satisfying the following conditions. For reference, the following conditions were set to evaluate the activity characteristics of the catalysts at severe space velocity in order to more clearly compare the difference in activity between catalysts.

<Experimental conditions>

Gas composition: $CH_4$: $CO_2$: $N_2$ = 1: 1.2:0.96

Flow rate: gas hour space velocity (GHSV) = 1,500 $hr^{-1}$ (based on $CH_4$)

Reaction temperature: 800°C

Reaction pressure: 1 bar

Then, a reaction conversion rate after 100 hours of reaction was calculated by analyzing the composition of the produced gas using gas chromatography (GC), and is shown in the following Table 3.

<GC analysis conditions>

1) GC model: Agilent 6890
2) Oven temperature: 40°C/7min-90°C/Smin-180°C/6min
3) Detector: TCD, 250°C
4) Sample loop: 0.25mL
5) Valve box Temp.: 150°C

[Table 3]

| Catalyst | $CH_4$ Conversion rate (%) | $CO_2$ Conversion rate (%) | $H_2/CO$ |
|---|---|---|---|
| Example 1 | 60 | 68 | 0.77 |
| Example 2 | 46 | 53 | 0.76 |
| Example 3 | 61 | 69 | 0.78 |
| Example 4 | 58 | 65 | 0.77 |
| Example 5 | 59 | 67 | 0.78 |

(continued)

| Catalyst | $CH_4$ Conversion rate (%) | $CO_2$ Conversion rate (%) | $H_2/CO$ |
|---|---|---|---|
| Example 6 | 60 | 69 | 0.78 |
| Example 7 | 48 | 56 | 0.76 |
| Example 8 | 60 | 68 | 0.77 |
| Example 9 | 46 | 53 | 0.76 |
| Comparative Example 1 | 2 | 4 | 0.18 |
| Comparative Example 2 | 42 | 54 | 0.73 |
| Comparative Example 3 | 2 | 5 | 0.15 |
| Comparative Example 4 | 22 | 24 | 0.57 |
| Comparative Example 5 | 41 | 50 | 0.71 |
| Comparative Example 6 | 68 | 78 | 0.70 |
| Comparative Example 7 | 59 | 62 | 0.71 |
| Comparative Example 8 | 2 | 4 | 0.18 |
| Comparative Example 9 | 43 | 50 | 0.76 |
| Comparative Example 10 | 62 | 70 | 0.77 |

The conversion rate in Table 3 was calculated using Equation 2 below.

[Equation 2]

$$\text{Conversion rate } (X_i, \%) = [(F_{iin} - F_{iout}) / F_{iin}] \times 100\ (\%)\quad (F_i = \text{flow rate of } i)$$

As can be seen from the results in Table 3, it could be confirmed that the catalysts of Examples 1 to 9 had high $CH_4$ conversion rate (%) and $CO_2$ conversion rate (%), as compared with the catalysts of the Comparative Examples.

In particular, when compared with the catalysts of Comparative Examples 1 to 4 without a secondary coating layer, it could be confirmed that the catalysts of Examples 1 to 9 had higher $CH_4$ conversion rate (%) and $CO_2$ conversion rate (%).

In addition, when compared with the catalyst of Comparative Example 5 without a primary coating layer, it could be confirmed that the catalysts of Examples 1 to 9 had higher $CH_4$ conversion rate (%) and $CO_2$ conversion rate (%).

In the case of Comparative Example 8 in which the secondary coating layer included the catalyst particles according to the present application but did not include the binder itself, it could be confirmed that no binder was included, so the secondary coating layer was not properly attached to the porous metal support, and accordingly, the $CH_4$ conversion rate (%) and $CO_2$ conversion rate (%) were very low and the catalyst did not function as a catalyst for methane reformation.

In addition, in Comparative Example 9, the performance of the prepared catalyst may be at a similar level to that of the Examples. However, as described above, like Comparative Example 9, when the secondary coating layer includes the binder according to the present application but does not include the catalyst particles according to the present application, it could be confirmed that the supported amount (%) during one coating was very small, so it took a lot of time and cost to prepare the catalyst.

Additionally, the degree of coke generation in Examples 1 to 7 and Comparative Examples 6 and 710, which had similar $CH_4$ conversion rates and $CO_2$ conversion rates as a result of the reaction, was measured. Specifically, the degree of coke generation was calculated using Equation 3 below, and the results are shown in Table 4 below.

For reference, the larger the value calculated by Equation 3 below, the more the amount of coke generated.

coke generation rate (%) = [weight of catalyst after reaction - weight of catalyst before reaction) / weight of catalyst before reaction] $\times$ 100(%)

[Table 4]

|  | Coke generation rate (%) |
|---|---|
| Example 1 | 0.4 |
| Example 2 | 0.0 |
| Example 3 | 0.4 |
| Example 4 | 0.3 |
| Example 5 | 0.4 |
| Example 6 | 0.4 |
| Example 7 | 0.0 |
| Comparative Example 6 | 6.5 |
| Comparative Example 7 | 3.1 |
| Comparative Example 10 | 2.8 |

As can be seen from the results in Table 4, it could be confirmed that the catalyst according to the present application had a significantly low coke generation rate. In particular, when compared with the catalyst of the present application, it could be confirmed that the coke generation rate was very high in Comparative Examples 6 and 7 in which the content of Ti was significantly small. This is thought to be a phenomenon that occurs because a perovskite structure whose content of Ti is very small is not formed well and Ni exists in the form of bulk.

Therefore, it could be confirmed from the results of Table 4 that the catalyst according to the present application can prevent the problem that the nickel catalyst is deactivated by carbon generated on the surface of the nickel catalyst during reaction at high temperatures, when compared with the catalysts of the Comparative Examples in which the $CH_4$ conversion rates (%) and $CO_2$ conversion rates (%) were similar. This means that the catalyst of the present application has durability at high temperatures, so there is an advantage in that the catalyst can be used for a long time during the reaction at high temperatures.

In conclusion, it could be confirmed that the catalyst of this application has excellent durability at high temperatures as described above and high catalyst activity.

## Claims

1.   A catalyst for methane reformation, comprising:
a porous metal support;

a primary coating layer provided on the porous metal support; and
a secondary coating layer provided on the primary coating layer,
wherein the primary coating layer comprises a perovskite-based compound with a coefficient of thermal expansion of 65% or greater compared to a coefficient of thermal expansion of the porous metal support,
wherein the secondary coating layer comprises a perovskite-based catalyst particle and a perovskite-based binder, and
wherein the perovskite-based catalyst particle and the perovskite-based binder each independently comprise a compound represented by Chemical Formula 1 below.

[Chemical Formula 1]            $Sr_{1-x}A_xTi_{1-y}B_yO_{3-\delta}$

in Chemical Formula 1,

A is Y, La or Ba,
B is Ni, Co, Fe, Mn, Cr, Mo, Ru or Rh,
x is $0 \leq x < 1$,
y is $0 \leq y < 0.5$,
$\delta$ is a value that satisfies balance, $0 \leq \delta < 1$, and

16

the x and y satisfy x + y > 0.

2. The catalyst for methane reformation of claim 1, wherein the perovskite-based compound with the coefficient of thermal expansion of 65% or greater compared to the coefficient of thermal expansion of the porous metal support is represented by Chemical Formula 3 below:

[Chemical Formula 3] $Sr_{1-a}Y_aTiO_{3-\delta}$

in Chemical Formula 3,

a is $0 \leq a < 1$, and
$\delta$ is a value that satisfies balance, and $0 \leq \delta < 1$.

3. The catalyst for methane reformation of claim 1, wherein Chemical Formula 1 above is represented by Chemical Formula 2 below:

[Chemical Formula 2] $Sr_{1-x}Y_xTi_{1-y}B_yO_{3-\delta}$

in Chemical Formula 2,

B is Ni, Co, Fe, Mn, Cr, Mo, Ru or Rh,
x is $0 \leq x < 0.3$,
y is $0 \leq y < 0.2$,
$\delta$ is a value that satisfies balance, $0 \leq \delta < 1$, and
the x and y satisfy x + y > 0.

4. The catalyst for methane reformation of claim 3, wherein B in Chemical Formula 2 above is Ni or Ru.

5. The catalyst for methane reformation of claim 1, wherein the porous metal support comprises at least one selected from NiCrAlFe, NiCrAl, stainless steel, and inconel.

6. The catalyst for methane reformation of claim 1, wherein a content of the perovskite-based catalyst particle and the perovskite-based binder is 3% by weight to 40% by weight, based on a total weight of the catalyst for methane reformation.

7. The catalyst for methane reformation of claim 1, wherein a concentration of the perovskite-based compound binder represented by Chemical Formula 1 above is 0.05M to 1M.

8. The catalyst for methane reformation of claim 1, wherein the catalyst for methane reformation is applied to a steam reforming process, a carbon dioxide ($CO_2$) reforming process, a catalytic partial oxidation process, an autothermal reforming process, a tri-reforming process, or a mixed reforming process.

9. A method for manufacturing a catalyst for methane reformation, the method comprising:

performing primary coating on a porous metal support with a first slurry comprising a perovskite-based compound with a coefficient of thermal expansion of 65% or greater compared to a coefficient of thermal expansion of the porous metal support; and
performing secondary coating with a second slurry comprising a perovskite-based catalyst particle and a perovskite-based binder after the primary coating,
wherein the perovskite-based catalyst particle and the perovskite-based binder each independently comprise a compound represented by Chemical Formula 1 below.

[Chemical Formula 1] $Sr_{1-x}A_xTi_{1-y}B_yO_{3-\delta}$

in Chemical Formula 1,

A is Y, La or Ba,
B is Ni, Co, Fe, Mn, Cr, Mo, Ru or Rh,

x is $0 \leq x < 1$,
y is $0 \leq y < 0.5$,
$\delta$ is a value that satisfies balance, $0 \leq \delta < 1$, and
the x and y satisfy $x + y > 0$.

10. The method of claim 9, wherein the perovskite-based compound with the coefficient of thermal expansion of 65% or greater compared to the coefficient of thermal expansion of the porous metal support is represented by Chemical Formula 3 below:

[Chemical Formula 3]         $Sr_{1-a}Y_aTiO_{3-\delta}$

in Chemical Formula 3,

a is $0 \leq a < 1$, and
$\delta$ is a value that satisfies balance, and $0 \leq \delta < 1$.

11. The method of claim 9, wherein Chemical Formula 1 above is represented by Chemical Formula 2 below:

[Chemical Formula 2]         $Sr_{1-x}Y_xTi_{1-y}B_yO_{3-\delta}$

in Chemical Formula 2,

B is Ni, Co, Fe, Mn, Cr, Mo, Ru or Rh,
x is $0 \leq x < 0.3$,
y is $0 \leq y < 0.2$,
$\delta$ is a value that satisfies balance, $0 \leq \delta < 1$, and
the x and y satisfy $x + y > 0$.

12. The method of claim 11, wherein B in Chemical Formula 2 above is Ni or Ru.

13. The method of claim 9, wherein the porous metal support comprises at least one selected from NiCrAlFe, NiCrAl, stainless steel, and inconel.

14. The method of claim 9, wherein a content of the perovskite-based catalyst particle and the perovskite-based binder is 3% by weight to 30% by weight, based on a total weight of the catalyst for methane reformation.

15. The method of claim 9, wherein a concentration of the perovskite-based compound binder represented by Chemical Formula 1 above is 0.05M to 1M.

<div align="center">

**INTERNATIONAL SEARCH REPORT**

</div>

| | International application No. |
|---|---|
| | **PCT/KR2023/014479** |

**A. CLASSIFICATION OF SUBJECT MATTER**

**B01J 23/00**(2006.01)i; **B01J 23/02**(2006.01)i; **B01J 21/06**(2006.01)i; **B01J 23/755**(2006.01)i; **B01J 23/46**(2006.01)i; **B01J 37/02**(2006.01)i; **C01B 3/40**(2006.01)i

According to International Patent Classification (IPC) or to both national classification and IPC

**B. FIELDS SEARCHED**

Minimum documentation searched (classification system followed by classification symbols)

B01J 23/00(2006.01); B01J 21/06(2006.01); B01J 23/46(2006.01); B01J 23/63(2006.01); B01J 23/75(2006.01); B01J 23/755(2006.01); B01J 35/04(2006.01); B01J 37/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 다공성 금속 지지체(porous metal support), 페로브스카이트(perovskite), 코팅층 (coating layer), 촉매(catalyst), 메탄개질(methane reforming)

**C. DOCUMENTS CONSIDERED TO BE RELEVANT**

| Category* | Citation of document, with indication, where appropriate, of the relevant passages | Relevant to claim No. |
|---|---|---|
| A | KR 10-2002-0080387 A (BATTELLE MEMORIAL INSTITUTE) 23 October 2002 (2002-10-23)<br>See claims 1-56. | 1-15 |
| A | KR 10-2018-0136701 A (KOREA INSTITUTE OF SCIENCE AND TECHNOLOGY) 26 December 2018 (2018-12-26)<br>See claims 1-13. | 1-15 |
| A | KR 10-2017-0060531 A (KOREA RESEARCH INSTITUTE OF CHEMICAL TECHNOLOGY) 01 June 2017 (2017-06-01)<br>See claims 1-9. | 1-15 |
| A | KR 10-2014-0087239 A (RESEARCH INSTITUTE OF INDUSTRIAL SCIENCE & TECHNOLOGY) 09 July 2014 (2014-07-09)<br>See claims 1-11. | 1-15 |

☑ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **26 December 2023** | **29 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/014479**

**C.        DOCUMENTS CONSIDERED TO BE RELEVANT**

| Category* | Citation of document, with indication, where appropriate, of the relevant passages | Relevant to claim No. |
|---|---|---|
| A | KR 10-2013-0074843 A (RESEARCH INSTITUTE OF INDUSTRIAL SCIENCE & TECHNOLOGY et al.) 05 July 2013 (2013-07-05) <br>     See claims 1-11. | 1-15 |

Form PCT/ISA/210 (second sheet) (July 2022)

| Patent document cited in search report | | | Publication date (day/month/year) | Patent family member(s) | | | Publication date (day/month/year) |
|---|---|---|---|---|---|---|---|
| KR | 10-2002-0080387 | A | 23 October 2002 | AT | 303866 | T | 15 September 2005 |
| | | | | AU | 2001-34666 | A1 | 07 August 2001 |
| | | | | AU | 2001-34666 | B2 | 11 November 2004 |
| | | | | AU | 2001-34666 | C | 07 August 2001 |
| | | | | AU | 2005-200598 | A1 | 10 March 2005 |
| | | | | AU | 2005-200598 | B2 | 20 December 2007 |
| | | | | AU | 3466601 | A | 07 August 2001 |
| | | | | AU | 778052 | B2 | 11 November 2004 |
| | | | | AU | 778052 | C | 01 September 2005 |
| | | | | CA | 2338815 | A1 | 10 February 2000 |
| | | | | CA | 2338815 | C | 18 December 2007 |
| | | | | CA | 2396144 | A1 | 02 August 2001 |
| | | | | CA | 2396144 | C | 19 November 2013 |
| | | | | CN | 1211162 | C | 20 July 2005 |
| | | | | CN | 1400923 | A | 05 March 2003 |
| | | | | DE | 69927162 | T2 | 08 June 2006 |
| | | | | DK | 1100618 | T3 | 09 January 2006 |
| | | | | EP | 1100618 | A1 | 23 May 2001 |
| | | | | EP | 1100618 | B1 | 07 September 2005 |
| | | | | EP | 1257362 | A1 | 20 November 2002 |
| | | | | EP | 1257362 | B1 | 08 May 2013 |
| | | | | EP | 2295140 | A1 | 16 March 2011 |
| | | | | HK | 1053996 | A1 | 14 November 2003 |
| | | | | JP | 2003-512143 | A | 02 April 2003 |
| | | | | JP | 2003-520675 | A | 08 July 2003 |
| | | | | JP | 2012-110894 | A | 14 June 2012 |
| | | | | JP | 4601822 | B2 | 22 December 2010 |
| | | | | JP | 4982717 | B2 | 25 July 2012 |
| | | | | JP | 5964594 | B2 | 03 August 2016 |
| | | | | KR | 10-0670954 | B1 | 11 January 2007 |
| | | | | NO | 20010374 | A | 23 March 2001 |
| | | | | NO | 20010374 | D0 | 23 January 2001 |
| | | | | NO | 20010374 | L | 23 March 2001 |
| | | | | NO | 20023080 | A | 13 September 2002 |
| | | | | NO | 20023080 | D0 | 26 June 2002 |
| | | | | NO | 20023080 | L | 13 September 2002 |
| | | | | RU | 2002120794 | A | 10 January 2004 |
| | | | | RU | 2257955 | C2 | 10 August 2005 |
| | | | | US | 2003-0007904 | A1 | 09 January 2003 |
| | | | | US | 2004-0188326 | A1 | 30 September 2004 |
| | | | | US | 6440895 | B1 | 27 August 2002 |
| | | | | US | 6479428 | B1 | 12 November 2002 |
| | | | | US | 6762149 | B2 | 13 July 2004 |
| | | | | US | 7498001 | B2 | 03 March 2009 |
| | | | | WO | 00-06301 | A1 | 10 February 2000 |
| | | | | WO | 01-54812 | A1 | 02 August 2001 |
| | | | | WO | 01-54812 | B1 | 29 November 2001 |
| KR | 10-2018-0136701 | A | 26 December 2018 | KR | 10-2015299 | B1 | 22 August 2019 |
| KR | 10-2017-0060531 | A | 01 June 2017 | KR | 10-1825495 | B1 | 05 February 2018 |
| | | | | WO | 2017-090864 | A1 | 01 June 2017 |

Form PCT/ISA/210 (patent family annex) (July 2022)

**INTERNATIONAL SEARCH REPORT**
Information on patent family members

International application No.

**PCT/KR2023/014479**

| Patent document cited in search report | | Publication date (day/month/year) | Patent family member(s) | | | Publication date (day/month/year) |
|---|---|---|---|---|---|---|
| KR 10-2014-0087239 | A | 09 July 2014 | KR | 10-1467405 | B1 | 25 November 2014 |
| KR 10-2013-0074843 | A | 05 July 2013 | KR | 10-1359990 | B1 | 03 February 2014 |

Form PCT/ISA/210 (patent family annex) (July 2022)

**EP 4 442 360 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220146236
- KR 1020190076367